# EUROPÄISCHE PATENTSCHRIFT

(11) **EP 3 630 412 B1**
(45) Veröffentlichungstag und Bekanntmachung des Hinweises auf die Patenterteilung: **04.01.2023**
(21) Anmeldenummer: 17728105.2
(22) Anmeldetag: 29.05.2017
(51) Int. Cl.: B24B 7/04, B24B 7/07, B24B 7/16, B23Q 7/02, B24B 41/06

(54) **SCHLEIFVERFAHREN ZUR BEARBEITUNG VON AUSSENFLAECHEN VON WERKSTUECKEN MIT EINER SCHLEIFSCHEIBE**
GRINDING METHOD FOR MACHINING EXTERNAL SURFACES OF WORKPIECES WITH A GRINDING WHEEL
PROCÉDÉ D'USINAGE PAR ABRASION POUR L'USINAGE DE SURFACES EXTERNES PIÈCES AVEC UNE MEULE ABRASIVE

(43) Veröffentlichungstag der Anmeldung: 08.04.2020
(73) Patentinhaber: Diskus Werke Schleiftechnik GmbH, 63128 Dietzenbach-Steinberg (DE)
(72) Erfinder: PREIS, Josef, 35287 Amöneburg (DE)
(74) Vertreter: Cohausz & Florack
(86) Internationale Anmeldenummer: PCT/EP2017/062889
(87) Internationale Veröffentlichungsnummer: WO 2018/219422

(56) Entgegenhaltungen:
- EP-A2- 0 180 175
- JP-A- S57 149 147
- JP-A- S61 168 462
- JP-B2- 5 938 297
- KR-A- 20130 053 481
- US-A- 3 872 626

## Beschreibung

Die Erfindung betrifft ein Schleifverfahren nach Anspruch 1.

Beschrieben ist zudem eine Werkstückträgereinheit, die nicht Gegenstand der Erfindung ist, mit mehreren Werkstückträgern, wobei die wenigstens zwei Werkstückträger um jeweils eine Werkstückträgerachse drehbar gelagert sind, und wobei die Werkstückträgereinheit um eine Werkstückträgereinheitachse drehbar gelagert ist.

Beschrieben ist zudem eine Schleifmaschine, die nicht Gegenstand der Erfindung ist, mit wenigstens einer derartigen Werkstückträgereinheit.

Unter "Schleifen" wird allgemein ein spanendes Fertigungsverfahren verstanden, bei dem überschüssiges Material in Form von Spänen abgetrennt wird. Die für das Schleifen eingesetzten Schleifwerkzeuge - beispielsweise Schleifscheiben - werden häufig hergestellt, indem ein Schüttgut, beispielsweise Korund, mit einem Bindemittel gebunden wird. Das Schleifen mit rotierendem Werkzeug - beispielsweise einer Schleifscheibe - ist zu unterscheiden von anderen Schleifverfahren, beispielsweise dem Bandschleifen.

Auf dem Gebiet der Schleiftechnik sind unterschiedliche Schleifverfahren und Schleifmaschinen bekannt. Bei vielen dieser Verfahren und Maschinen ist vorgesehen, dass die zu schleifenden Werkstücke auf einer Transporteinrichtung mit mehreren Werkstückaufnahmen angeordnet werden. Transporteinrichtungen mit mehreren Werkstückaufnahmen haben den Vorteil einer besonders effizienten Verfahrensführung, da die Dauer des Schleifvorgangs dazu genutzt werden kann, die freien Werkstückaufnahmen mit neuen, ungeschliffenen Werkstücken zu bestücken oder die bereits geschliffenen Werkstücke von ihren Werkstückaufnahmen zu entfernen. Ein weiterer Vorteil mehrerer Werkstückaufnahmen ist, dass mehrere Werkstücke gleichzeitig mit dem Werkstück in Eingriff bringbar sind.

Eine derartige Schleifmaschine ist beispielsweise aus der EP 0 941 803 B1 bekannt, dort in der Ausgestaltung einer Doppelplanschleifmaschine mit zwei parallel zueinander zustellbaren Schleifscheiben und mit einer Transporteinrichtung mit drei Werkstückaufnahmen.

Ein Nachteil derartiger Verfahren und Vorrichtungen ist jedoch die Eigenschaft, dass stets nur diejenige Werkstückaufnahme rotiert, auf der das aktuell bearbeitete Werkstück angeordnet ist bzw. auf der die aktuell bearbeiteten Werkstücke angeordnet sind. Die anderen Werkstückaufnahmen stehen derweil still, damit sie beladen bzw. entladen werden können. Ein weiterer Nachteil besteht darin, dass immer nur höhengleiche Werkstücke geschliffen werden können.

Aus dem Stand der Technik ist zudem das Dokument KR 2013 0 053 481 A bekannt, welches den Oberbegriff des Anspruchs 1 offenbart.

Der Erfindung liegt daher die Aufgabe zugrunde, das eingangs beschriebene Schleifverfahren derart auszugestalten und weiterzubilden, dass unter Vermeidung der zuvor genannten Nachteile eine möglichst effizienter und präziser Schleifvorgang ermöglicht wird.

Diese Aufgabe wird gelöst dadurch, dass die Werkstückträgereinheit beim Schleifen der Werkstücke vollständig um die Werkstückträgereinheitachse rotiert.

Das erfindungsgemäße Verfahren dient dazu, die Oberfläche von Werkstücken zu bearbeiten, insbesondere zu schleifen. Ein erster Schritt sieht vor, eine Schleifmaschine mit einem Schleifwerkzeug bereitzustellen. Bei dem Schleifwerkzeug kann es sich beispielsweise um eine Schleifscheibe handeln. Das Schleifwerkzeug ist um eine Schleifwerkzeugachse drehbar gelagert, es kann daher eine Rotationsbewegung ausführen. Ein weiterer Schritt sieht vor, dass wenigstens zwei zu bearbeitende Werkstücke bereitgestellt werden. Ein weiterer Schritt sieht vor, dass die Werkstücke auf einem von wenigstens zwei Werkstückträgern einer Werkstückträgereinheit angeordnet werden. Dabei sind die wenigstens zwei Werkstückträger um jeweils eine Werkstückträgerachse drehbar gelagert. Es können auch drei oder mehr Werkstückträger vorgesehen sein, in diesem Fall sind vorzugsweise alle Werkstückträger um jeweils eine Werkstückträgerachse drehbar gelagert. Zudem ist die Werkstückträgereinheit um eine Werkstückträgereinheitachse drehbar gelagert. Ein weiterer Schritt sieht das Schleifen der Werkstückoberflächen der Werkstücke vor. Dabei rotiert das Schleifwerkzeug um die Schleifwerkzeugachse. Zudem rotieren die wenigstens zwei Werkstückträger um jeweils eine Werkstückträgerachse. Wenn drei oder mehr Werkstückträger vorgesehen sind, rotieren vorzugsweise alle Werkstückträger im jeweils eine Werkstückträgerachse. Die Werkstückoberflächen von wenigstens zwei auf anderen bzw. unterschiedlichen Werkstückträgern angeordneten Werkstücken werden gleichzeitig bearbeitet.

Indem erfindungsgemäß vorgesehen ist, dass wenigstens zwei - vorzugsweise aber alle - Werkstückträger um jeweils eine Werkstückträgerachse rotieren, können die Werkstückoberflächen von mehreren Werkstücken auch dann gleichzeitig bearbeitet werden, wenn die Werkstücke nicht auf demselben Werkstückträger angeordnet sind. Dies unterscheidet das beanspruchte Verfahren beispielsweise von der EP 0 941 803 B1. Das gleichzeitige Schleifen mehrere Werkstücke hat zunächst den Vorteil einer effizienten Verfahrensführung. Ein weiterer Vorteil liegt darin, dass diejenigen Werkstücke, die gleichzeitig geschliffen werden, besonders präzise auf ein identisches Maß bzw. auf dasselbe Maß abgeschliffen werden können. Dies liegt darin begründet, dass der am weitesten vorstehende Punkt des Schleifwerkzeugs - also der tiefste Punkt - alle Werkstücke erreicht. Zudem ist vorteilhaft, dass zu innenliegenden bzw. zurückgesetzten Planflächen referenziert werden kann und dass zu einer gespannten Fläche (insbesondere Außenmantelfläche oder Bohrung) enge Lagetoleranzen (insbesondere Rechtwinkligkeit) eingehalten werden kann.

Nach dem Verfahren ist zudem vorgesehen, dass die Werkstückträgereinheit vollständig um die Werkstückträgereinheitachse rotiert. Unter einer vollständigen Rotation wird eine Drehung von mehr als 360° verstanden. Eine kontinuierliche Rotation, also eine Rotation mit gleichbleibender Rotationsrichtung hat beispielsweise gegenüber einer oszillierenden Bewegung den Vorteil, dass die Werkstückträgereinheit nicht gebremst und beschleunigt werden muss. Vorzugsweise rotiert die Werkstückträgereinheit mit konstanter Rotationsgeschwindigkeit.

Eine weitere Ausgestaltung des Verfahrens sieht vor, dass die Werkstückträgereinheit um die Werkstückträgereinheitachse oszilliert. Unter einer Oszillation wird eine Drehbewegung verstanden, bei der die Rotationsrichtung wechselt, also eine Hin- und Herbewegung. Eine oszillierende Bewegung hat den Vorteil, dass die Werkstücke, die auf den Werkstückträgern der Werkstückträgereinheit angeordnet sind, nur innerhalb eines begrenzten Bereichs bewegt werden.

Gemäß einer weiteren Ausbildung des Verfahrens ist vorgesehen, dass die Werkstücke an einer Außenfläche geschliffen werden. Das Schleifen der Außenflächen hat den Vorteil, dass mehrere Werkstücke von demselben Schleifwerkzeug geschliffen werden können. Dies ist beim Schleifen von Innenflächen nicht möglich, da hierzu die Schleifwerkzeuge ("Innenspindeln") in das Werkstück eingeführt werden müssen - beispielsweise in das Innere eines Zylinderrings. Auch beim Schleifen von Innenflächen können mehrere Werkstücke gleichzeitig geschliffen werden, wenn mehrere Schleifwerkzeuge vorhanden sind.

In weiterer Ausgestaltung des Verfahrens ist vorgesehen, dass die Schleifwerkzeugachse und die Werkstückträgereinheitachse parallel, insbesondere kollinear verlaufen. Durch einen parallelen Verlauf der Achsen wird erreicht, dass der Abstand zwischen dem Schleifwerkzeug und der Werkstückträgereinheit in jeder Drehstellung konstant ist. Zudem wird durch parallele Drehachsen ermöglicht, dass das rotierende Schleifwerkzeug nicht mit seiner Umfangsfläche ("Umfangsschleifen"), sondern mit einer seiner Seitenflächen ("Seitenschleifen") mit dem Werkstück in Kontakt kommt. Ein derartiges Schleifverfahren wird auch als "Seiten-Planschleifen" bezeichnet. Wenn die Schleifwerkzeugachse und die Werkstückträgereinheitachse nicht nur parallel, sondern sogar kollinear angeordnet sind, wird erreicht, dass das Schleifwerkzeug zentral oberhalb der Werkstückträgereinheit angeordnet ist und auf diese Weise einen möglichst großen Bereich der Werkstückträgereinheit abdecken kann. Dies erlaubt die gleichzeitige Bearbeitung möglichst vieler Werkstücke. Zudem ermöglicht die symmetrische Anordnung des Schleifwerkzeugs zentral oberhalb der Werkstückträgereinheit einen Schleifvorgang auch bei stillstehender Werkstückträgereinheit, sofern die Werkstückträger und das Schleifwerkzeug rotieren. Eine parallele Anordnung der Achsen ist in den meisten Fällen ausreichend, eine kollineare Anordnung ist nur in Sonderfällen erforderlich. Bei "Mehrspindlern" kann vorgesehen sein, dass die Schleifwerkzeuge individuell in axialer Richtung zugestellt werden können, um individuelle Maßkorrekturen zu ermöglichen.

Nach einer weiteren Ausgestaltung des Verfahrens ist vorgesehen, dass wenigstens eine Werkstückträgerachse parallel zu der Werkstückträgereinheitachse verläuft. Es kann vorgesehen sein, dass alle Werkstückträgerachsen parallel zu der Werkstückträgereinheitachse verlaufen. Alternativ oder zusätzlich hierzu kann in weiterer Ausgestaltung vorgesehen sein, dass wenigstens eine Werkstückträgerachse geneigt und/oder verschränkt zu der Werkstückträgereinheitachse verläuft. Es kann vorgesehen sein, dass alle Werkstückträgerachsen geneigt und/oder verschränkt zu der Werkstückträgereinheitachse verlaufen. Durch einen parallelen Verlauf der Achsen kann eine besonders gute Ebenheit, erkennbar am Kreuzschliffbild, sowie eine gute Rechtwinkligkeit der geschliffenen Flächen zur Werkstückrotationsachse erreicht werden. Durch eine Neigung der Werkstückträger können hingegen Bauteile mit einer definierten plan/hohl-Form gefertigt werden. Die Werkstückträger können in radialer Richtung der Werkstückträgereinheit geneigt sein, und zwar radial nach innen oder radial nach außen. Alternativ oder zusätzlich können die Werkstückträger in Umfangsrichtung bzw. in Tangentialrichtung der Werkstückträgereinheit verschränkt sein, und zwar in Drehrichtung oder gegen die Drehrichtung der Werkstückträgereinheit. Durch eine Verschränkung kann das Schliffbild beeinflusst werden. Wenn der Verschränkungswinkel auf 0° eingestellt ist, kann eine perfekte Ebenheit erreicht werden, was am Kreuzschliff erkennbar ist. Durch die Einstellung eines gezielten Verschränkungswinkels (ungleich 0°, also größer 0° oder kleiner 0°) kann hingegen ein gerichtetes Schliffbild erzeugt werden.

Gemäß einer weiteren Ausgestaltung des Verfahrens ist vorgesehen, dass unterschiedlich hohe Werkstücke gleichzeitig geschliffen werden. Unter unterschiedlich hohen Werkstücken werden insbesondere Werkstücke verstanden, die sich von dem Werkstückträger ausgehend unterschiedlich weit in Richtung des Schleifwerkzeugs erstrecken. Diese Vorgehensweise kann beispielsweise dadurch ermöglicht werden, dass einige oder alle der Werkstücke beim Schleifen auf Auflagen angeordnet werden. Indem zwischen dem Werkstückträger und der Werkstück eine Auflage angeordnet wird, können Höhenunterschiede ausgeglichen werden. Hierzu können unterschiedlich dicke bzw. unterschiedlich hohe Auflagen verwendet werden. Auch können Höhenunterschiede durch spezifische Werkzeugträger ausgeglichen werden.

Nach einer weiteren Ausbildung des Verfahrens ist vorgesehen, dass die Rotationsgeschwindigkeit der Werkstückträger unabhängig von der Rotationsgeschwindigkeit der Werkstückträgereinheit einstellbar ist. Alternativ oder zusätzlich kann vorgesehen sein, dass die Rotationsrichtung der Werkstückträger unabhängig von der Rotationsrichtung der Werkstückträgereinheit einstellbar ist. Vorzugsweise ist sowohl die Rotationsgeschwindigkeit und/oder die Rotationsrichtung jedes Werkstückträgers unabhängig von der Rotationsgeschwindigkeit und/oder der Rotationsrichtung der Werkstückträgereinheit einstellbar. Auf diese Weise kann das Schleifverfahren optimal auf die Art der Werkstücke und auf das zu erzielende Schleifergebnis eingestellt werden. Bevorzugt rotieren die Werkstückträger beim Schleifvorgang mit einer anderen Winkelgeschwindigkeit als die Werkstückträgereinheit. Es kann vorgesehen sein, dass die Werkstückträger mit einer höheren Winkelgeschwindigkeit oder mit einer niedrigeren Winkelgeschwindigkeit als die Werkstückträgereinheit rotieren; bevorzugt ist jedoch, dass die Werkstückträger mit einer höheren Winkelgeschwindigkeit als die Werkstückträgereinheit rotieren.

Gemäß einer weiteren Ausgestaltung des Verfahrens ist vorgesehen, dass das Schleifwerkzeug zylindrisch geformt ist und in axialer Richtung und/oder in radialer Richtung relativ bewegbar gelagert ist. Durch die zylindrische Form können ebene Flächen geschliffen werden (durch die Stirnfläche bzw. Seitenfläche des Schleifwerkzeugs) und es können gekrümmte Flächen geschliffen werden (durch die Umfangsfläche bzw. Mantelfläche des Schleifwerkzeugs). Die axiale Beweglichkeit ermöglicht ein Aufsetzen des Schleifwerkzeugs auf das Werkstück und ein Abheben des Schleifwerkzeugs von dem Werkstück. Die Beweglichkeit in radialer Richtung hat insbesondere beim Schleifen von Innenflächen Vorteile, da das Schleifwerkzeug zunächst in das Werkstückeingeführt werden kann und danach - durch radiale Verschiebung - an die zu schleifende Fläche angestellt werden kann.

Beschrieben ist zudem eine Werkstückträgereinheit mit mehreren Werkstückträgern, wobei die wenigstens zwei Werkstückträger um jeweils eine Werkstückträgerachse drehbar gelagert sind, und wobei die Werkstückträgereinheit um eine Werkstückträgereinheitachse drehbar gelagert ist. Die Werkstückträgereinheit ist dadurch gekennzeichnet, dass die Werkstückträgereinheit und die Werkstückträger unabhängig voneinander antreibbar sind, insbesondere gleichzeitig antreibbar sind. Mit der Werkstückträgereinheit (auch "Rundtisch" genannt) kann das zuvor beschriebene Schleifverfahren ausgeführt werden.

Unter unabhängigen Antrieben wird insbesondere verstanden, dass die Rotationsgeschwindigkeit der Werkstückträger unabhängig von der Rotationsgeschwindigkeit der Werkstückträgereinheit einstellbar ist. Alternativ oder zusätzlich kann vorgesehen sein, dass die Rotationsrichtung der Werkstückträger unabhängig von der Rotationsrichtung der Werkstückträgereinheit einstellbar ist. Vorzugsweise ist sowohl die Rotationsgeschwindigkeit und/oder die Rotationsrichtung jedes Werkstückträgers unabhängig von der Rotationsgeschwindigkeit und/oder der Rotationsrichtung der Werkstückträgereinheit einstellbar. Auf diese Weise kann die Werkstückträgereinheit optimal auf die Art der Werkstücke und auf das zu erzielende Schleifergebnis eingestellt werden. Die Unabhängigkeit der Antriebe schließt jedoch nicht aus, dass die Rotationsbewegung der Werkstückträgereinheit und die Rotationsbewegung der Werkstückträger aufeinander abgestimmt sind, beispielsweise gemäß einer besonders einfachen Ausführung gekoppelt sind.

Nach einer Ausgestaltung der Werkstückträgereinheit ist vorgesehen, dass wenigstens eine Werkstückträgerachse parallel zu der Werkstückträgereinheitachse verläuft. Es kann vorgesehen sein, dass alle Werkstückträgerachsen parallel zu der Werkstückträgereinheitachse verlaufen. Alternativ oder zusätzlich kann vorgesehen sein, dass wenigstens eine Werkstückträgerachse geneigt und/oder verschränkt zu der Werkstückträgereinheitachse verläuft. Es kann vorgesehen sein, dass alle Werkstückträgerachsen geneigt und/oder verschränkt zu der Werkstückträgereinheitachse verlaufen. Durch einen parallelen Verlauf der Achsen kann eine besonders gute Ebenheit, erkennbar am Kreuzschliffbild, sowie eine gute Rechtwinkligkeit der geschliffenen Flächen zur Werkstückrotationsachse erreicht werden. Durch eine Neigung der Werkstückträger können hingegen Bauteile mit einer definierten plan/hohl-Form gefertigt werden. Die Werkstückträger können in radialer Richtung der Werkstückträgereinheit geneigt sein, und zwar radial nach innen oder radial nach außen. Alternativ oder zusätzlich können die Werkstückträger in Umfangsrichtung bzw. in Tangentialrichtung der Werkstückträgereinheit verschränkt sein, und zwar in Drehrichtung oder gegen die Drehrichtung der Werkstückträgereinheit. Durch eine Verschränkung kann das Schliffbild beeinflusst werden. Wenn der Verschränkungswinkel auf 0° eingestellt ist, kann eine perfekte Ebenheit erreicht werden, was am Kreuzschliff erkennbar ist. Durch die Einstellung eines gezielten Verschränkungswinkels (ungleich 0°, also größer 0° oder kleiner 0°) kann hingegen ein gerichtetes Schliffbild erzeugt werden.

Gemäß einer weiteren Ausbildung der Werkstückträgereinheit kann vorgesehen sein, dass wenigstens einer der Werkstückträger neigbar und/oder verschränkbar gelagert ist. Vorzugsweise sind alle Werkstückträger neigbar und/oder verschränkbar gelagert. Durch eine neigbare oder verschränkbare Lagerung kann die Lage der Werkstückträgerachse verändert werden. Auf diese Weise können die Werkstückträger unterschiedliche Stellungen einnehmen. Beispielsweise kann die Werkstückträgerachse so eingestellt werden, dass sie parallel zu der Werkstückträgereinheitachse verläuft. Alternativ hierzu kann die Werkstückträgerachse so eingestellt werden, dass sie schräg, also geneigt oder verschränkt zu der Werkstückträgereinheitachse verläuft. Die Lagerung der Werkstückträger kann derart gestaltet sein, dass die Werkstückträger in radialer Richtung der Werkstückträgereinheit neigbar sind (radial nach innen oder radial nach außen). Alternativ oder zusätzlich kann die Lagerung der Werkstückträger derart gestaltet sein, dass die Werkstückträger in Umfangsrichtung der Werkstückträgereinheit verschränkbar sind (in Drehrichtung oder gegen die Drehrichtung der Werkstückträgereinheit). Die Lagerung der Werkstückträger kann beispielsweise als Kalottenlagerung, vorzugsweise als feststellbare Kalottenlagerung ausgebildet sein. Alternativ oder zusätzlich hierzu kann die Neigung bzw. die Verschränkung durch elastische Materialverformung bestimmter Bereiche des Werkstückträgers erreicht werden. Der Werkstückträger weist beispielsweise eine rotierende Welle, ein Gehäuse und Lager (insb. Wälzlager) auf. Entscheidend für die Schrägstellung der Achse eines Werkstückträgers ist die Verkippung der Lagerung des Werkstückträgers. Dies geschieht, indem das (ein- oder mehrteilige Gehäuse mit den Lagersitzen als Ganzes verkippt wird oder aber in Bereichen elastisch verformt wird. Alternativ kann die Achse verstellt werden, wenn nur eines der beiden Lager geringfügig verstellt wird. Zur Reduktion der erforderlichen Verformungskraft ist es hilfreich, wenn das Gehäuse gezielt geschwächt ist.

Eine weitere Ausbildung der Werkstückträgereinheit sieht vor, dass wenigstens einer der Werkstückträger in einer geneigten und/oder verschränkten Stellung fixiert werden kann. Hierzu wird weiter vorgeschlagen, dass wenigstens einer der Werkstückträger zur Fixierung der geneigten und/oder verschränkten Stellung einen fixierbaren Stellring aufweist. Zur Einstellung der Neigung und Verschränkung kann vorgesehen sein, dass wenigstens einer der Werkstückträger Stellschrauben zum Justieren seiner Neigung und/oder Verschränkung aufweist. Sowohl der Neigungswinkel als auch der Verschränkungswinkel sollen justierbar und in der justierten Position fixierbar sein. Die Neigung bzw. Verschränkung kann durch eine geeignete Lagerung (z.B. Kalottenlagerung) oder durch elastische Deformation des Gehäuses erreicht werden. Die Fixierung kann beispielsweise durch einen Stellring erfolgen, der vorzugsweise durch axiale Feststellschrauben fixiert wird. Eine besonders präzise Justierung kann durch Stellschrauben erreicht werden.

Nach einer weiteren Ausgestaltung der Werkstückträgereinheit ist vorgesehen, dass die Werkstückträger unterschiedliche Werkstückaufnahmen aufweisen. Insbesondere kann vorgesehen sein, dass die Werkstückträger unterschiedlich hohe Werkstückaufnahmen aufweisen. Unter unterschiedlich hohen Werkstückaufnahmen werden insbesondere Werkstückaufnahmen verstanden, die sich von der Werkstückträgereinheit ausgehend unterschiedlich weit in Richtung des Schleifwerkzeugs erstrecken. Auf diese Weise können unterschiedliche hohe Werkstücke gleichzeitig von demselben Schleifwerkzeug geschliffen werden. Die Werkstückaufnahmen können integral - also als Teil der Werkstückträger - gestaltet sein oder als separates Bauteil gestaltet sein, beispielsweise als Auflage, die zwischen dem Werkstückträger und der Werkstück angeordnet wird. Es kann sich um spannende Werkstückaufnahmen, formschlüssige Werkstückaufnahmen und/oder reibschlüssige Werkstückaufnahmen handeln.

Beschrieben ist zudem eine Schleifmaschine, die nicht Gegenstand der Erfindung ist, mit wenigstens einer Werkstückträgereinheit der zuvor beschriebenen Art. Die Schleifmaschine weist neben der Werkstückträgereinheit wenigstens ein Schleifwerkzeug auf, wobei das Schleifwerkzeug um eine Schleifwerkzeugachse drehbar gelagert ist. Mit der Schleifmaschine kann das zuvor beschriebene Schleifverfahren ausgeführt werden.

Die Schleifmaschine kann gemäß einer weiteren Ausgestaltung ergänzt werden durch wenigstens einen Greifer zur Beladung und/oder zur Entladung der Werkstückträger.

Durch einen, zwei oder mehr Greifer können die Werkstückträger der Werkstückträgereinheit mit Werkstücken beladen und entladen werden, wodurch eine automatisierte und effiziente Verfahrensführung möglich wird.

Zu dieser Ausgestaltung wird schließlich vorgeschlagen, dass der wenigstens eine Greifer als Wendegreifer ausgestaltet ist. Unter einem Wendegreifer wird ein Greifer verstanden, der um wenigstens 180°, vorzugsweise aber um 360° drehbar ist. So kann der Greifer Werkstücke wenden, beispielsweise um eine Bearbeitung der Werkstücke auf unterschiedlichen Seiten der Werkstücke zu ermöglichen.

Bei der Bewegung der Werkstücke durch die Greifer findet die wesentliche Bewegung (längster Weg) der Werkstücke vorzugsweise quer zur Längsrichtung der Werkstücke statt, also quer zur Richtung der Werkstückachse.

Die Offenbarungen, die nicht Gegenstand der Erfindung sind, werden nachfolgend anhand einer lediglich ein bevorzugtes Ausführungsbeispiel darstellenden Zeichnung erläutert. In der Zeichnung zeigen:
- Fig. 1A:: eine erste Ausgestaltung einer Schleifmaschine in einer perspektivischen Ansicht,
- Fig. 1B:: das Schleifwerkzeug und die Werkstückträgereinheit der Schleifmaschine aus Fig. 1A in einer Vorderansicht,
- Fig. 1C:: die Werkstückträgereinheit der Schleifmaschine aus Fig. 1A in einer Draufsicht,
- Fig. 2A:: eine zweite Ausgestaltung einer Schleifmaschine in einer perspektivischen Ansicht, welche das erfindungsgemäße Verfahren nicht durchführen kann,
- Fig. 2B:: die Schleifwerkzeuge und die Werkstückträgereinheit der Schleifmaschine aus Fig. 2A in einer Vorderansicht,
- Fig. 2C:: die Werkstückträgereinheit der Schleifmaschine aus Fig. 2A in einer Draufsicht,
- Fig. 3A:: eine alternative Ausgestaltung einer Werkstückträgereinheit in einer Draufsicht,
- Fig. 3B:: die Werkstückträgereinheit aus Fig. 3A in einer geschnittenen Ansicht entlang der in Fig. 3A eingezeichneten Schnittebene A-A,
- Fig. 3C:: die Werkstückträgereinheit aus Fig. 3A in einer geschnittenen Ansicht entlang der in Fig. 3A eingezeichneten Schnittebene B-B,
- Fig. 4A:: den Werkstückträger aus Fig. 3A in einer vergrößerten Ansicht, und
- Fig. 4B:: eine alternative Ausgestaltung des Werkstückträgers aus Fig. 4A.

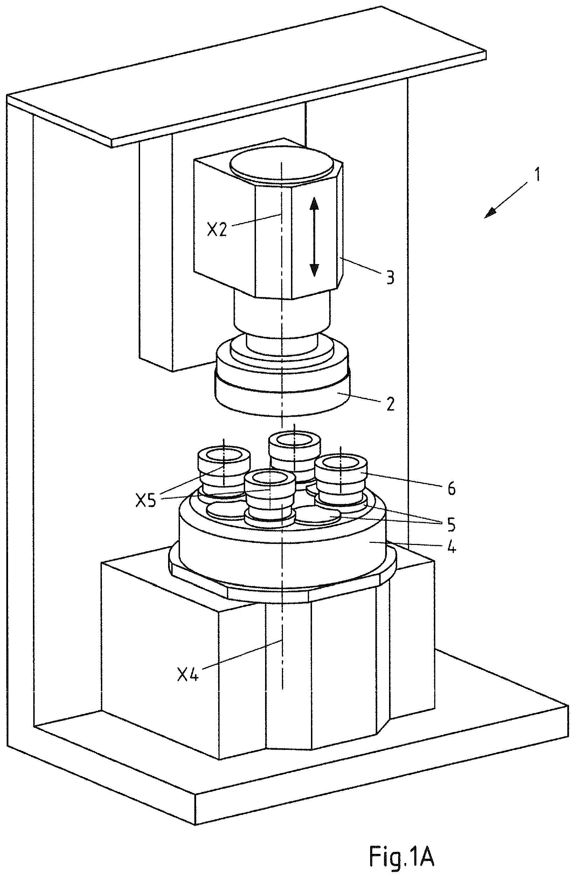

Fig. 1A zeigt eine erste Ausgestaltung einer Schleifmaschine 1 in einer perspektivischen Ansicht. Bei der dargestellten Schleifmaschine 1 handelt es sich um eine so genannte Planschleifmaschine, genauer: um eine Seiten-Planschleifmaschine. Die Schleifmaschine 1 umfasst ein Schleifwerkzeug 2, das um eine Schleifwerkzeugachse X2 drehbar gelagert ist. Die Schleifwerkzeugachse X2 ist senkrecht bzw. vertikal ausgerichtet ("Senkrechte Spindel"). Bei dem Schleifwerkzeug 2 handelt es sich um eine Schleifscheibe, die etwa zylindrisch geformt ist. Das Schleifwerkzeug 2 wird durch einen Antrieb 3 angetrieben und kann in wenigstens vertikaler Richtung - also in Richtung der Schleifwerkzeugachse X2 - verschoben werden.

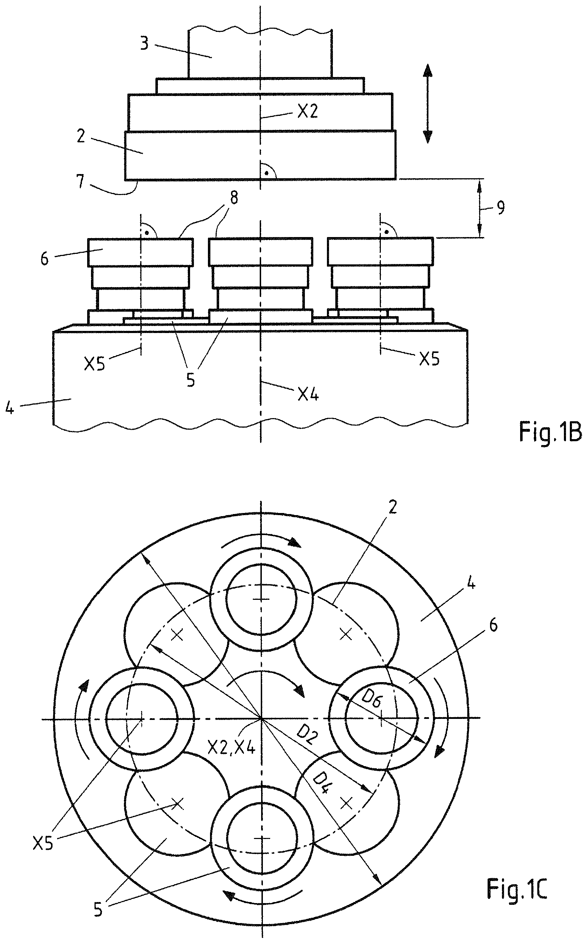

Die in Fig. 1 gezeigte Schleifmaschine 1 umfasst zudem eine Werkstückträgereinheit 4 mit acht umlaufend angeordneten Werkstückträgern 5. Auf jedem zweiten Werkstückträger 5 - also auf insgesamt vier der acht Werkstückträger 5 - sind zu bearbeitende Werkstücke 6 angeordnet. Die Werkstückträgereinheit 4 ist um eine Werkstückträgereinheitachse X4 drehbar gelagert. Die Werkstückträgereinheitachse X4 ist senkrecht bzw. vertikal ausgerichtet. Zudem verläuft die Werkstückträgereinheitachse X4 kollinear zur Schleifwerkzeugachse X2. Die Werkstückträger 5 sind ebenfalls drehbar gelagert, und zwar um jeweils eine Werkstückträgerachse X5. Bei der in Fig. 1 gezeigten Ausgestaltung der Schleifmaschine 1 sind die Werkstückträgerachsen X5 etwa senkrecht bzw. vertikal ausgerichtet und parallel zur Werkstückträgereinheitachse X4 angeordnet. Alternativ hierzu könnten die Werkstückträgerachse X5 jedoch auch relativ zur Werkstückträgereinheitachse X4 geneigt angeordnet sein. Dies wird nachfolgend im Zusammenhang mit einer anderen Ausgestaltung der Schleifmaschine diskutiert.

Das Schleifen der Werkstücke 6 erfolgt auf der in Fig. 1 gezeigten Schleifmaschine 1, indem das Schleifwerkzeug 2 um die Schleifwerkzeugachse X2 rotiert. Zudem rotiert die Werkstückträgereinheit 4 um die Werkstückträgereinheitachse X4 und die Werkstückträger 5 rotieren um ihre Werkstückträgerachsen X5. Nachdem das Schleifwerkzeug 2 auf die zu bearbeitenden Werkstücke 6 abgesenkt wurde, werden die Oberflächen mehrerer Werkstücke 6, insbesondere aller Werkstücke 6 - vorzugsweise gleichzeitig - von dem Schleifwerkzeug 2 erfasst und geschliffen. Das Schleifwerkzeug 2 und sein Antrieb 3 können in vertikaler Richtung verschoben werden, um das Schleifwerkzeug 2 auf die Werkstücke 6 aufsetzen und wieder abheben zu können (in Fig. 1A durch einen Doppelpfeil dargestellt).

In Fig. 1B sind das Schleifwerkzeug 2 und die Werkstückträgereinheit 4 der Schleifmaschine 1 aus Fig. 1A in einer Vorderansicht gezeigt. Diejenigen Bereiche der Schleifmaschine 1, die bereits im Zusammenhang mit Fig. 1A beschrieben wurden, sind in Fig. 1B - und in allen weiteren Figuren - mit entsprechenden Bezugszeichen versehen. Das Schleifwerkzeug 2 weist eine ebene Schleiffläche 7 auf und die Werkstücke 6 weisen eine zu bearbeitende Oberfläche 8 auf. Die ebene Schleiffläche 7 des Schleifwerkzeugs 2 verläuft etwa rechtwinklig zur Schleifwerkzeugachse X2 und die zu bearbeitenden Oberflächen 8 der Werkstücke 6 verlaufen etwa rechtwinklig zu den Werkstückträgerachsen X5. Erkennbar verlaufen die Schleifwerkzeugachse X2 und die Werkstückträgereinheitachse X4 kollinear, während die Werkstückträgerachsen X5 parallel versetzt zu diesen beiden Achsen X2, X4 verlaufen. Gezeigt ist in Fig. 1B eine Maschinenstellung vor Beginn des Schleifvorgangs; zu diesem Zeitpunkt existiert zwischen der Schleiffläche 7 des Schleifwerkzeugs 2 und den zu bearbeitenden Oberflächen 8 der Werkstücke 6 in vertikaler Richtung noch ein Abstand 9. Die vertikale Verschiebbarkeit des Schleifwerkzeugs 2 und seines Antriebs 3 sind in Fig. 1B durch einen geraden Doppelpfeil dargestellt; die Rotationsbewegungen sind aus Gründen der besseren Übersichtlichkeit hingegen nicht mit Pfeilen gekennzeichnet.

Fig. 1C zeigt die Werkstückträgereinheit 4 der Schleifmaschine 1 aus Fig. 1A in einer Draufsicht. Diejenigen Bereiche der Schleifmaschine 1, die bereits im Zusammenhang mit Fig. 1A oder Fig. 1B beschrieben wurden, sind in Fig. 1C - und in allen weiteren Figuren - mit entsprechenden Bezugszeichen versehen. In der Draufsicht ist besonders gut erkennbar, dass das Schleifwerkzeug 2 alle vier zu bearbeitenden Werkstücke 6 erfasst. Aufgrund der Rotation der Werkstücke 6 um die Werkstückträgerachsen X5 werden alle zu schleifenden Bereiche der Werkstücke 6 von dem Schleifwerkzeug 2 erfasst, obgleich der Durchmesser D2 des Schleifwerkzeugs 2 geringer ist als der Durchmesser D4 der Werkstückträgereinheit 4 und obgleich die Werkstücke 6 mit ihrem Außendurchmesser D6 in radialer Richtung teilweise außerhalb des Schleifwerkzeugs 2 angeordnet sind. Dies wird dadurch erreicht, dass der Abstand der Werkstückträgerachsen X5 von der Schleifwerkzeugachse X2 geringer ist als der halbe Durchmesser D2 (also der Radius) des Schleifwerkzeugs 2. Die Rotation des Schleifwerkzeugs 2 und die Rotation der Werkstücke 6 sind in Fig. 1C durch gekrümmte Pfeile dargestellt; es ist erkennbar, dass das Schleifwerkzeug 2 und die Werkstücke 6 dieselbe Rotationsrichtung aufweisen, nämlich im Uhrzeigersinn. Zusätzlich ist vorgesehen, dass die Werkstückträgereinheit 4 um ihre Werkstückträgereinheitachse X4 rotiert.

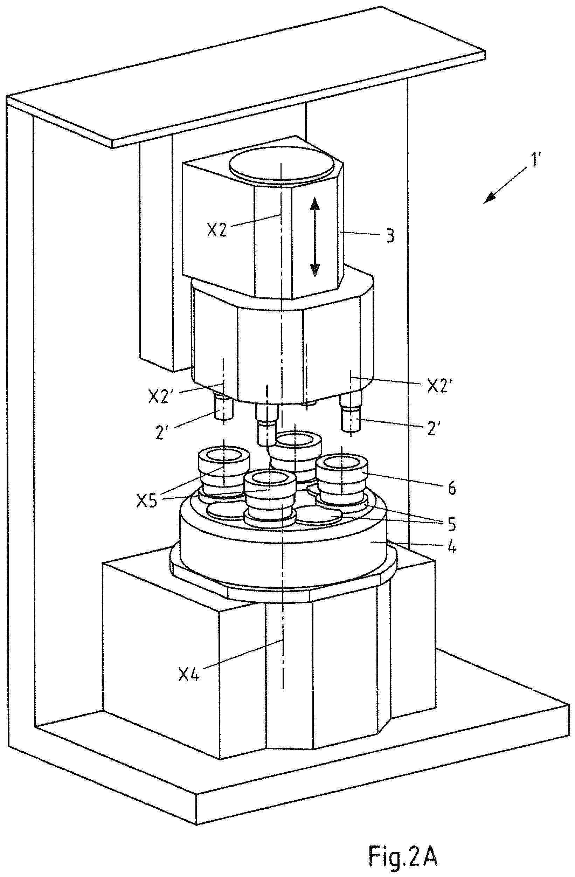

Fig. 2A zeigt eine zweite - lediglich zu Vergleichszwecken dargestellte - Ausgestaltung einer Schleifmaschine 1' in einer perspektivischen Ansicht, welche das erfindungsgemäße Verfahren nicht durchführen kann. Diejenigen Bereiche der Schleifmaschine 1', die bereits im Zusammenhang mit Fig. 1A bis Fig. 1C beschrieben wurden, sind in Fig. 2A - und in allen weiteren Figuren - mit entsprechenden Bezugszeichen versehen. Ein Unterschied zwischen der ersten Ausgestaltung der Schleifmaschine 1 (Fig. 1A bis Fig. 1C) und der zweiten Ausgestaltung der Schleifmaschine 1' (Fig. 2A bis Fig. 2C) liegt darin, dass die zweite Ausgestaltung der Schleifmaschine 1' vier Schleifwerkzeuge 2' aufweist, die um jeweils eine Schleifwerkzeugachse X2' drehbar gelagert sind.

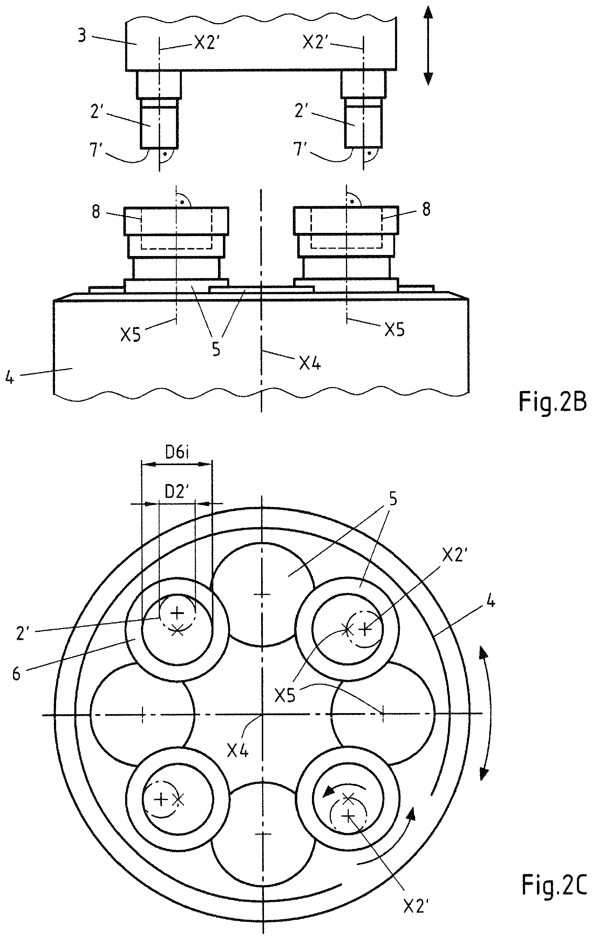

In Fig. 2B sind die Schleifwerkzeuge 2' und die Werkstückträgereinheit 4 der Schleifmaschine 1' aus Fig. 2A in einer Vorderansicht dargestellt. Diejenigen Bereiche der Schleifmaschine 1', die bereits im Zusammenhang mit Fig. 2A beschrieben wurden, sind in Fig. 2B - und in allen weiteren Figuren - mit entsprechenden Bezugszeichen versehen. Die Schleifwerkzeuge 2' weisen jeweils eine Schleiffläche 7' auf, die etwa rechtwinklig zur jeweiligen Schleifwerkzeugachse X2' verläuft. Die zu bearbeitenden Werkstücke 6 sind auf jeweils einem Werkstückträger 5 angeordnet, wobei es sich bei den zu bearbeitenden Oberflächen 8 der Werkstücke 6 diesmal um innenliegende Oberflächen 8 handelt. Die Werkstückträger 5 weisen Werkstückträgerachsen X5 auf, die parallel versetzt zur Werkstückträgereinheitachse X4 verlaufen. Die Schleifwerkzeugachse X2 und die Werkstückträgereinheitachse X4 verlaufen kollinear. Die vertikale Verschiebbarkeit der Schleifwerkzeuge 2' und ihres Antriebs 3 sind in Fig. 2B durch einen geraden Doppelpfeil dargestellt. Die Schleifwerkzeuge 2' sind zudem in radialer Richtung verschiebbar (parallele Verschiebung der Schleifwerkzeugachsen X2'), was aus Gründen der besseren Übersichtlichkeit jedoch nicht durch Pfeile gekennzeichnet ist.

Fig. 2C zeigt die Werkstückträgereinheit 4 der Schleifmaschine 1' aus Fig. 2A in einer Draufsicht. Diejenigen Bereiche der Schleifmaschine 1', die bereits im Zusammenhang mit Fig. 2A oder Fig. 2B beschrieben wurden, sind in Fig. 2C - und in allen weiteren Figuren - mit entsprechenden Bezugszeichen versehen. In der Draufsicht ist besonders gut erkennbar, dass jedem der vier Werkstücke 6 ein eigenes Schleifwerkzeug 2' zugeordnet ist. Da der Außendurchmesser D2' der Schleifwerkzeuge 2' kleiner ist als der Innendurchmesser D6i der Werkstücke 6, können die Schleifwerkzeuge 2' in die Werkstücke 6 eingeführt werden und auf diese Weise innen liegende Flächen der Werkstücke 6 schleifen. Die Rotation der Schleifwerkzeuge 2' und die Rotation der Werkstücke 6 sind in Fig. 2C durch gekrümmte Pfeile dargestellt. Da die Schleifwerkzeuge 2' in die Werkstücke 6 eingeführt sind, kann die Werkstückträgereinheit 4 keine vollständig umlaufende Rotationsbewegung um die Werkstückträgereinheitachse X4 machen; stattdessen macht die Werkstückträgereinheit 4 eine oszillierende Rotationsbewegung (dargestellt durch einen gekrümmten Doppelpfeil).

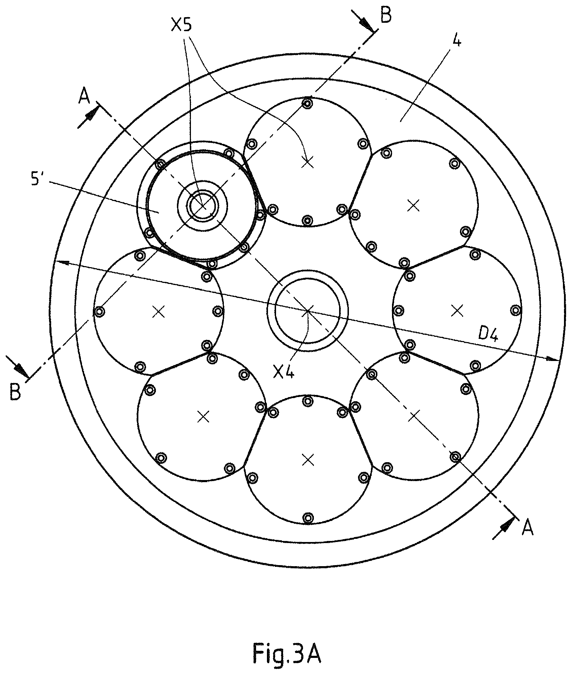

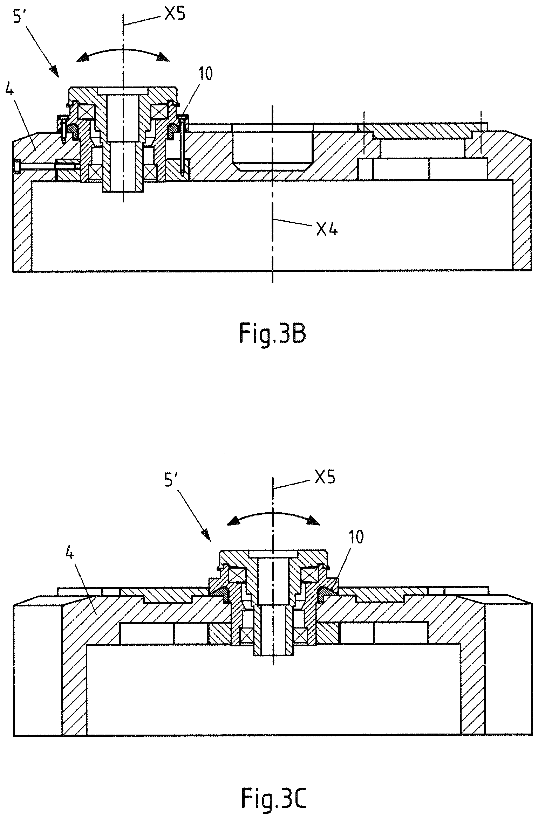

In Fig. 3A ist eine alternative Ausgestaltung einer Werkstückträgereinheit 4 in einer Draufsicht gezeigt. Diejenigen Bereiche der Werkstückträgereinheit 4, die bereits zuvor beschrieben wurden, sind in Fig. 3A - und in allen weiteren Figuren - mit entsprechenden Bezugszeichen versehen. Die dritte Ausgestaltung der Werkstückträgereinheit 4 unterscheidet sich insbesondere dadurch von der zuvor beschriebenen Ausgestaltung, dass Werkstückträger 5' mit einer neigbaren bzw. verschränkbaren Lagerung vorgesehen sind. Hierauf wird im Zusammenhang mit Fig. 3B und Fig. 3C detaillierter eingegangen.

Fig. 3B zeigt die Werkstückträgereinheit aus Fig. 3A in einer geschnittenen Ansicht entlang der in Fig. 3A eingezeichneten Schnittebene A-A und in Fig. 3C ist die Werkstückträgereinheit aus Fig. 3A in einer geschnittenen Ansicht entlang der in Fig. 3A eingezeichneten Schnittebene B-B dargestellt. Diejenigen Bereiche der Werkstückträgereinheit 4, die bereits zuvor beschrieben wurden, sind in Fig. 3B und in Fig. 3C - wie auch in allen weiteren Figuren - mit entsprechenden Bezugszeichen versehen. In Fig. 3B ist erkennbar, dass der Werkstückträger 5' eine Kipplagerung 10 aufweist, auf die nachfolgend noch detaillierter eingegangen wird. Die Kipplagerung 10 erlaubt sowohl eine Schwenkbewegung bzw. Kippbewegung des Werkstückträgers 5' in radialer Richtung der Werkstückträgereinheit 4 - also entlang der Schnittebene A-A in Fig. 3A (gekrümmter Doppelpfeil in Fig. 3B; "Neigung") als auch in Umfangsrichtung bzw. in tangentialer Richtung der Werkstückträgereinheit 4 - also entlang der Schnittebene B-B in Fig. 3A (gekrümmter Doppelpfeil in Fig. 3C; "Verschränkung"). Durch Kombination der beiden dargestellten - rechtwinklig zueinander verlaufenden - Schwenkrichtungen kann der Werkstückträger 5' in jede Richtung geneigt bzw. verschränkt werden. Dies hat zur Folge, dass die Werkstückträgerachse X5 nicht mehr zwingend parallel zur Werkstückträgereinheitachse X4 verlaufen muss sondern - je nach Stellung des Werkstückträgers 5' - geneigt oder verschränkt sein kann.

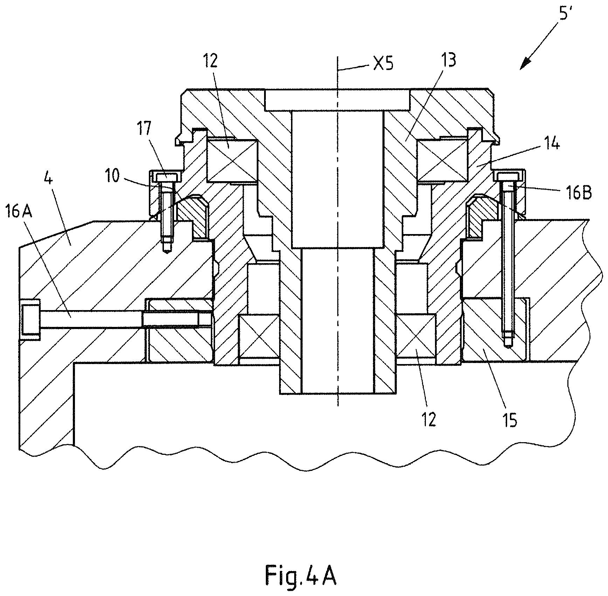

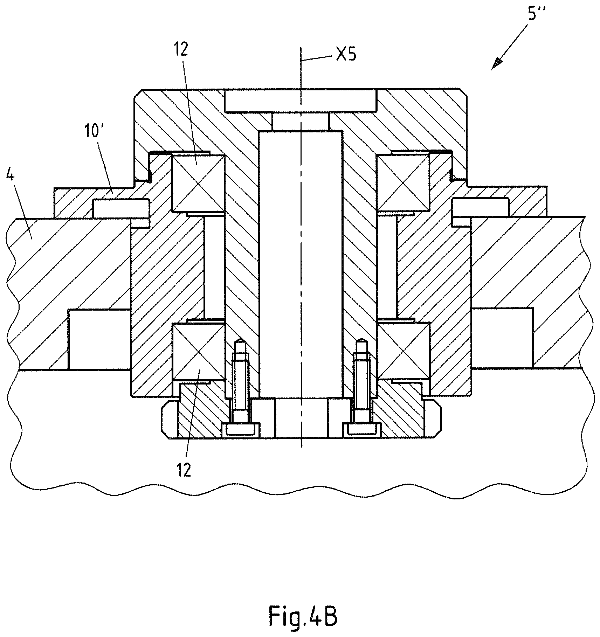

In Fig. 4A ist der Werkstückträger 5' aus Fig. 3A in einer vergrößerten Ansicht gezeigt. Fig. 4B zeigt eine alternative Ausgestaltung des Werkstückträgers 5" aus Fig. 4A. Diejenigen Bereiche der Werkstückträger 5', 5", die bereits zuvor beschrieben wurden, sind in Fig. 4A und in Fig. 4B mit entsprechenden Bezugszeichen versehen. Der Werkstückträger 5', 5" ist in beiden Ausgestaltungen relativ zu der Werkstückträgereinheit 4 drehbar gelagert, wozu der Werkstückträger 5' aus Fig. 4A ebenso wie der Werkstückträger 5" aus Fig. 4B Wälzlager 12 aufweist, mit denen eine rotierende Welle 13 drehbar in einem Gehäuse 14 gelagert ist. Zudem ist der Werkstückträger 5', 5" ist in beiden Ausgestaltungen schwenkbar gelagert. Dies wird bei dem Werkstückträger 5' aus Fig. 4A über eine Kipplagerung 10 erreicht, die als Kalottenlagerung ausgestaltet ist. Der Werkstückträger 5' weist einen fixierbaren Stellring 15 auf, der um das Gehäuse 14 herum verläuft. Die Lage des Stellrings 15 - und somit auch die Neigungslage bzw. Verschränkungslage des Werkstückträgers 5'- kann über Stellschrauben 16 präzise justiert werden. Bei dem in Fig. 4A gezeigten Beispiel ist eine radiale Stellschraube 16A und eine axiale Stellschraube 16B vorhanden. Im Anschluss an die Justierung kann die Position des Werkstückträgers 5' über Feststellschrauben 17 in jeder beliebigen Neigungslage bzw. Verschränkungslage festgestellt werden. Bei dem Werkstückträger 5" aus Fig. 4B funktioniert die Kipplagerung 10' hingegen durch eine elastische Verformung bestimmter Bereiche des Werkstückträgers 5". Die für die elastische Verformung bestimmten Bereiche können beispielsweise besonders dünn ausgebildet sein. Die in Fig. 4B gezeigte Kipplagerung 10' ist nur für kleinere Kippwinkel geeignet, für größere Kippwinkel wird die in Fig. 4A dargestellte Kipplagerung 10 bevorzugt.

### Bezugszeichenliste:

- 1, 1':: Schleifmaschine
- 2,2':: Schleifwerkzeug
- 3:: Antrieb (des Schleifwerkzeugs 2,2')
- 4:: Werkstückträgereinheit
- 5, 5', 5":: Werkstückträger
- 6:: Werkstück
- 7, 7':: Schleiffläche (des Schleifwerkzeugs 2, 2')
- 8:: Oberfläche (des Werkstücks 6)
- 9:: Abstand (zwischen Schleifwerkzeug 2, 2' und Werkstück 6)
- 10, 10':: Kipplagerung
- 12:: Wälzlager (des Werkstückträgers)
- 13:: Welle (des Werkstückträgers)
- 14:: Gehäuse (des Werkstückträgers)
- 15:: Stellring
- 16, 16A, 16B:: Stellschraube
- 17:: Feststellschraube

- D2, D2':: Außendurchmesser (des Schleifwerkzeugs 2,2')
- D4:: Außendurchmesser (der Werkstückträgereinheit 4)
- D6:: Außendurchmesser (der Werkstücke 6)
- D6i:: Innendurchmesser (der Werkstücke 6)
- X2, X2':: Schleifwerkzeugachse
- X4:: Werkstückträgereinheitachse
- X5:: Werkstückträgerachse

## Patentansprüche

1. Schleifverfahren zur Bearbeitung der Oberfläche von Werkstücken (6), insbesondere zur Bearbeitung von Außenflächen von Werkstücken (6), umfassend die folgenden Schritte:
a) Bereitstellen einer Schleifmaschine (1) mit einem Schleifwerkzeug (2),
- wobei das Schleifwerkzeug (2) um eine Schleifwerkzeugachse (X2) drehbar gelagert ist,
b) Bereitstellen von wenigstens zwei zu bearbeitenden Werkstücken (6),
c) Anordnen der Werkstücke (6) auf einem von wenigstens zwei Werkstückträgern (5, 5', 5") einer Werkstückträgereinheit (4),
- wobei die Werkstücke (6) auf unterschiedlichen Werkstückträgern (5, 5', 5") angeordnet werden,
- wobei die wenigstens zwei Werkstückträger (5, 5', 5") um jeweils eine Werkstückträgerachse (X5) drehbar gelagert sind, und
- wobei die Werkstückträgereinheit (4) um eine Werkstückträgereinheitachse (X4) drehbar gelagert ist, und
d) Schleifen der Werkstückoberflächen (8) der Werkstücke (6),
- wobei das Schleifwerkzeug (2) um die Schleifwerkzeugachse (X2) rotiert,
- wobei die wenigstens zwei Werkstückträger (5, 5', 5") um jeweils eine Werkstückträgerachse (X5) rotieren, und
- wobei die Werkstückoberflächen (8) von wenigstens zwei auf unterschiedlichen Werkstückträgern (5, 5', 5") angeordneten Werkstücken (6) gleichzeitig von demselben Schleifwerkzeug (2) bearbeitet werden,
**dadurch gekennzeichnet, dass** die Werkstückträgereinheit (4) beim Schleifen der Werkstücke (6) vollständig um die Werkstückträgereinheitachse (X4) rotiert.

2. Schleifverfahren nach Anspruch 1,
**dadurch gekennzeichnet, dass**
die Werkstückträgereinheit (4) um die Werkstückträgereinheitachse (X4) oszilliert.

3. Schleifverfahren nach Anspruch 1 oder Anspruch 2,
**dadurch gekennzeichnet, dass**
die Werkstücke (6) an einer Außenfläche geschliffen werden.

4. Schleifverfahren nach einem der Ansprüche 1 bis 3,
**dadurch gekennzeichnet, dass**
die Schleifwerkzeugachse (X2) und die Werkstückträgereinheitachse (X4) parallel, insbesondere kollinear verlaufen.

5. Schleifverfahren nach einem der Ansprüche 1 bis 4,
**dadurch gekennzeichnet, dass**
wenigstens eine Werkstückträgerachse (X5) parallel zu der Werkstückträgereinheitachse (X4) verläuft.

6. Schleifverfahren nach einem der Ansprüche 1 bis 5,
**dadurch gekennzeichnet, dass**
wenigstens eine Werkstückträgerachsen (X5) geneigt und/oder verschränkt zu der Werkstückträgereinheitachse (X4) verläuft.

7. Schleifverfahren nach einem der Ansprüche 1 bis 6,
**dadurch gekennzeichnet, dass**
unterschiedlich hohe Werkstücke (6) gleichzeitig geschliffen werden.

8. Schleifverfahren nach einem der Ansprüche 1 bis 7,
**dadurch gekennzeichnet, dass**
die Rotationsgeschwindigkeit der Werkstückträger (5, 5', 5") unabhängig von der Rotationsgeschwindigkeit der Werkstückträgereinheit (4) einstellbar ist.

9. Schleifverfahren nach einem der Ansprüche 1 bis 8,
**dadurch gekennzeichnet, dass**
das Schleifwerkzeug (2) zylindrisch geformt ist und in axialer Richtung und/oder in radialer Richtung relativ bewegbar gelagert ist.

## Claims

1. Grinding method for machining the surface of workpieces (6), in particular for machining outer surfaces of workpieces (6), comprising the following steps:
a) providing a grinding machine (1) with a grinding tool (2),
- wherein the grinding tool (2) is rotatably mounted about a grinding tool axis (X2),
b) providing at least two workpieces (6) to be machined,
c) arranging the workpieces (6) on one of at least two
workpiece carriers (5, 5', 5") of a workpiece carrier unit (4),
- wherein the workpieces (6) are arranged on different workpiece carriers (5, 5' 5"),
- wherein the at least two workpiece carriers (5, 5', 5") are each rotatably mounted about a workpiece carrier axis (X5), and
- wherein the workpiece carrier unit (4) is rotatably mounted about a workpiece carrier unit axis (X4),
and
d) grinding the workpiece surfaces (8) of the workpieces (6),
- wherein the grinding tool (2) rotates about the grinding tool axis (X2),
- wherein the at least two workpiece carriers (5, 5', 5") each rotate about a workpiece carrier axis (X5), and
- wherein the workpiece surfaces (8) of at least two workpieces (6) arranged on different workpiece carriers (5, 5', 5") are simultaneously machined by the same grinding tool (2),
**characterised in that** the workpiece carrier unit (4) rotates completely about the workpiece carrier unit axis (X4) when grinding the workpieces (6).

2. Grinding method according to claim 1, **characterised in that** the workpiece carrier unit (4) oscillates about the workpiece carrier unit axis (X4).

3. Grinding method according to claim 1 or claim 2, **characterised in that** the workpieces (6) are ground on an outer surface.

4. Grinding method according to any one of claims 1 to 3, **characterised in that** the grinding tool axis (X2) and the workpiece carrier unit axis (X4) run parallel, in particular collinearly.

5. Grinding method according to any one of claims 1 to 4, **characterised in that** at least one workpiece carrier axis (X5) runs parallel to the workpiece carrier unit axis (X4).

6. Grinding method according to any one of claims 1 to 5, **characterised in that** at least one workpiece carrier axis (X5) runs inclined and/or obliquely to the workpiece carrier unit axis (X4).

7. Grinding method according to any one of claims 1 to 6, **characterised in that** workpieces (6) of different heights are ground simultaneously.

8. Grinding method according to any one of claims 1 to 7, **characterised in that** the rotational speed of the workpiece carriers (5, 5', 5") can be adjusted independently of the rotational speed of the workpiece carrier unit (4).

9. Grinding method according to any one of claims 1 to 8, **characterised in that** the grinding tool (2) is cylindrically formed and is mounted in a relatively movable manner in the axial direction and/or in the radial direction.

## Revendications

1. Procédé d'usinage par abrasion pour l'usinage de la surface de pièces (6), en particulier pour l'usinage de surfaces externes de pièces (6), comprenant les étapes suivantes :
a) fourniture d'une machine d'usinage par abrasion (1) comprenant un outil abrasif (2),
- l'outil abrasif (2) étant monté rotatif autour d'un axe d'outil abrasif (X2),
b) fourniture d'au moins deux pièces (6),
c) montage des pièces (6) sur l'un d'au moins deux porte-pièces (5, 5', 5") d'un ensemble porte-pièces (4),
- les pièces (6) étant disposées sur des porte-pièces (5, 5', 5") différents,
- lesdits au moins deux porte-pièces (5, 5', 5") étant montés rotatifs autour d'un axe de porte-pièces (X5) respectif, et
- l'ensemble porte-pièces (4) étant monté rotatif autour d'un axe de l'ensemble porte-pièces (X4),
et
d) usinage par abrasion des surfaces (8) des pièces (6),
- l'outil abrasif (2) tournant autour de l'axe d'outil abrasif (X2),
- lesdits au moins deux porte-pièces (5, 5', 5") tournant autour d'un axe de porte-pièces (X5) respectif, et
- les surfaces (8) d'au moins deux pièces (6) disposées sur d'autres porte-pièces (5, 5', 5") étant usinées simultanément par le même outil abrasif (2),
**caractérisé en ce que** l'ensemble porte-pièces (4) tourne entièrement autour de l'axe de l'ensemble porte-pièces (X4) lors de l'usinage par abrasion des pièces (6).

2. Procédé d'usinage par abrasion selon la revendication 1, **caractérisé en ce que** l'ensemble porte-pièces (4) oscille autour de l'axe de l'ensemble porte-pièces (X4).

3. Procédé d'usinage par abrasion selon la revendication 1 ou la revendication 2, **caractérisé en ce que** les pièces (6) sont usinées par abrasion sur une surface externe.

4. Procédé d'usinage par abrasion selon l'une des revendications 1 à 3, **caractérisé en ce que** l'axe de l'outil abrasif (X2) et l'axe de l'ensemble porte-pièces (X4) sont parallèles, en particulier colinéaires.

5. Procédé d'usinage par abrasion selon l'une des revendications 1 à 4, **caractérisé en ce qu'**au moins un axe de porte-pièces (X5) est parallèle à l'axe de l'ensemble porte-pièces (X4).

6. Procédé d'usinage par abrasion selon l'une des revendications 1 à 5, **caractérisé en ce qu'**au moins un axe de porte-pièces (X5) est incliné et/ou croisé par rapport à l'axe de l'ensemble porte-pièces (X4).

7. Procédé d'usinage par abrasion selon l'une des revendications 1 à 6, **caractérisé en ce que** des pièces de hauteurs différentes (6) sont usinées par abrasion simultanément.

8. Procédé d'usinage par abrasion selon l'une des revendications 1 à 7, **caractérisé en ce que** la vitesse de rotation des porte-pièces (5, 5', 5") est réglable indépendamment de la vitesse de rotation de l'ensemble porte-pièces (4).

9. Procédé d'usinage par abrasion selon l'une des revendications 1 à 8, **caractérisé en ce que** l'outil abrasif (2) est de forme cylindrique et qu'il est monté relativement mobile dans le sens axial et/ou radial.
